# EUROPEAN PATENT APPLICATION

(11) **EP 4 379 573 A1**
(43) Date of publication of application: **05.06.2024**
(21) Application number: 22211116.3
(22) Date of filing: 02.12.2022
(51) Int. Cl.: G06F 16/93

(54) **COMPUTER IMPLEMENTED METHOD FOR AN AUTOMATED SEARCH OF AN ARTICLE OF A PRINTED MEDIUM**

(71) Applicant: Comyan GmbH, 82205 Gilching (DE)
(72) Inventor: Pekhterev, Alexander, 82205 Gilching (DE); Resele, Wolfgang, 82205 Gilching (DE); Resele, Peter, 82205 Gilching (DE)
(74) Representative: Flach Bauer & Partner Patentanwälte mbB

(57) **Abstract**

The present invention relates to a computer implemented method 1000, 2000 for an automated search of an article 312 of a printed medium 300, particularly of a printed newspaper and/or a printed magazine. Further, the present invention relates to a user equipment 100 and to a database management device 200, being adapted to perform respective steps of the computer implemented method as well as to a system 10 for performing the computer implemented method.

## Description

### Field of the invention

The present invention relates to a computer implemented method for an automated search of an article of a printed medium, particularly of a printed newspaper and/or a printed magazine. Further, the present invention relates to a device, such as a user equipment and to a database management device, being adapted to perform respective steps of the computer implemented method, as well as to a system for performing the computer implemented method.

### Background

Nowadays, digital content, particular digital newspapers and magazines are widely spread. Those digital contents coexist with printed media including respective printed content. Both, digital and printed contents have their individual prospects and drawbacks. While digital contents can be shared easily and displayed on a number of devices, it is always bound to a user equipment, UE, such as personal computer, a laptop computer, a tablet computer, a smartphone or other electronic devices.

Printed content is comfortable to read and keeps the reader's attention, especially for longer articles, as the reader is not distracted by other content such as incoming messages or advertisements. However, those printed contents are difficult to share. Further, a printed content is bound to its printed format, whereas digital content can be displayed in a variety of formats. For example, a poorly-seeing reader can easily increase the font-size to improve readability, or can even use a read-aloud function provided by a respective user equipment to display the content acoustically. Further, digital content can provide additional information or content besides the written word. Thus, audio-tracks, image galleries and/or videos can be linked with the digital content.

Thus, for obtaining advantages of both, the printed and the digital world, a reader of a printed article has to search this article, e.g. via an internet search engine, or a search engine provided by a respective publishing house, and load his article to his UE in order to achieve the respective digital content for displaying and/or sharing. This is cumbersome and oftentimes not successful.

For more convenient searches, search tools such as Google Lens have been recently developed. Based on a captured image, the algorithm of the search tool searches the internet for similar pictures. Further, characters/text being part of the captured image may be recognized and used as a search string. For searching distinct articles of a printed medium however, these search tools are unsuited. This is, as the image recognition outputs similar images only, without considering the content of the respective article. Typically pictures of general newspaper articles are found. Even character/text-recognition based attempts are unsuited. This is, as the recognized characters/text is used as a general search string, leading to a high variety of different search results, without finding the actual article being searched. Instead of returning the searched article only, known algorithms provide as feedback a list of different search results. The user has then to decide, which of the presented search results is the searched article or fits best.

Further, it is known to print digital patters, such as QR-Codes on the printed medium to provide a direct link to a digital version of the respective printed article and/or further contents. However, those digital patterns require printing space and are hence undesired.

Accordingly, there is a need in the art to provide an improved facility for searching an article of a printed medium to a respective digital version thereof, which is precise and convenient to use.

### Summary

The invention relates to a computer implemented method for an automated search of an article of a printed medium according to claims 1 and 7. Further, the present invention relates to a device according to claim 13, and to a database management device according to claim 14, as well as to a system for an automated search of an article of a printed medium according to claim 15. The invention relates also to a computer program according to claim 16. Further aspects of the present invention are given in the dependent claims.

According to an aspect of the present invention, a computer-implemented method for an automated search of an article of a printed medium is provided. The printed medium can be any type of printed medium, such as a book, a printed newspaper, a printed magazine, a poster, an advertisement and/or the like. The method comprises the following steps:
- Capturing image data of the printed medium. The image data may include static image data, such as photos and/or dynamic image data, such as videos. Further, depending on the type of sensor used for capturing the image data, the image data may include data captured in the IR-range and/or 3D-data.
- Processing the captured image data, including an optical character recognition (OCR). Hence, at least some of the character(s) and/or text being present in the captured image data can be automatically recognized. The processing step is not limited to an OCR-recognition, but can include further image processing and/or analyzing steps for obtaining additional information/data.
- Determining a data quality based on the processed image data and checking whether a predefined data quality criterion is met (i.e. if the data quality meets the predefined data quality criterion). Thus, it can be determined, whether the quality and/or quantity of the captured and/or processed image data is sufficient to perform the actual search.
- Transmitting the processed image data to a database management device, if the data quality criterion is met. The capturing processing and determining step may be performed on the same device, e.g. on a user equipment, UE, such as personal computer, a laptop computer, a tablet computer, a smartphone or on another electronic device. Further, the capturing step can be done with a separate device, such as a camera, (wirelessly) connected to a processing device, such as a personal computer. After it has been determined that the predefined data quality criterion is met, the processed image data is transmitted to a database management device.

The processed image data may include OCR-character(s)/text of the captured image data. Particularly, the character(s)/text being present in the captured image data, or fragments thereof may be part of the processed image data. Besides these OCR-character(s)/text-information, additional information and/or the captured image data may be transmitted. The OCR-character(s)/text may further be auto-corrected prior to transmission, particularly recognition errors and resulting spelling errors may be automatically corrected.

The database management device may include software and/or hardware and may be distributed over a network. Particularly the database management device may be a cloud-based database management device. The database management device is adapted to access at least one database, wherein the at least one database includes database entries each assigned to a respective digital version of a printed article. It is to be understood, that the database(s) that are accessed may include further database entries that are not assigned to a respective digital version of a printed article. In a particular example, at least one database may be a database of a publishing house, of a newspaper, a magazine and/or the like. The database(s) may be distributed and may in particular be cloud-based databases or databases accessible via the internet.

The database management device is further adapted to initiate a search on the at least one database for a digital version of a printed article corresponding to the transmitted image data. Hence, there is no need for a user to formulate a search string for searching a respective printed article. As prior to searching, the captured image data is processed and as a quality criterion has to be met prior to searching, the search result is very precise. It has shown, that with the above method, the digital version of a printed article can be precisely determined, without bothering a user with non-matching search results.

The method comprises further the step of
- Receiving data from the database management device, wherein the data corresponds to the digital version of the searched printed article. In a particularly preferred aspect of the invention, only one search result, i.e. the data corresponding to the digital version of the searched article, is received.

For example, after having successfully searched, the digital version of the printed article can be transmitted to the device having transmitted the processed image data, e.g. a UE. Besides sending the digital version of the printed article a link or pointer to the digital version of the printed article can be transmitted. Thus, for obtaining the actual content of the digital version of the printed article it has to be downloaded. This allows to minimize transmitted data, as the digital version of the printed article can be downloaded on demand. For example, in a scenario, where the person searching the article wishes to forward and/or share the article, there is no need to transmit the digital version of the printed article causing a higher data volume compared to transmitting a pointer or link, only.

After having received the data corresponding to the digital version of the printed article, the digital version of the searched printed article may be displayed on the device having transmitted the processed image data. Additionally, or alternatively, the data corresponding to the digital version of the printed article and/or the digital version of the printed article may be forwarded to a further recipient, such as a further UE and/or a cloud-based platform, including social media.

The term displaying is to be understood broadly and includes displaying the digital version of the printed article on a screen of the device and/or providing a voice output of the digital version of the printed article. The respective audio data may be part of the transmitted data, transmitted by the database management device, may be downloaded following a link transmitted by the database management device, and/or may be a synthetic audio data, generated on the device having received the data corresponding to the digital version of the printed article. Thus, e.g. a poorly-seeing reader can easily consume the content of the printed article, respectively the digital version thereof, as after having received the search result, the font-size of the displayed digital version of the printed article can be easily increased, or a read-aloud function can be used for acoustically displaying the digital version.

The processing step and in particular the optical character recognition may be performed in real-time. Thus, the step of capturing image data of the printed medium may be continued until the predefined data quality criterion is met, e.g. as long as quality and/or quantity of the captured image data meet the predefined data quality criterion. Alternatively, processing and capturing can be performed subsequently. This allows processing image data being formerly captured.

The predefined data quality criterion may include at least one of an OCR quality number, a word quantity number, a weighted word quantity number, a word quality number, a blur of the image data, exposure of the image data, contrast of the image data, and/or saturation of the image data. Particularly, the data quality criterion may be a complex quality measure that is based on multiple of the aforementioned parameters. The parameters may be weighted within the complex quality measure.

The OCR quality number may include a likelihood index representing the likelihood, a character (or a multitude of characters) was recognized correctly. Further, a string (i.e. a word) of recognized characters may be compared to a dictionary to determine an OCR quality number. In case the recognized characters form a known word, stored in the dictionary, it can be assumed that the character recognition for the respective string was successful.

Further, when including a word quantity number, the predefined data quality criterion may require a recognition of at least 10 words, or of at least 20 words, or of at least 30 words, wherein it may also be required that those words stem from the same area of the captured image, e.g. being consecutive words of the printed article. Further, the recognized words may be compared to a dictionary to determine an additional word quality number.

When including a weighted word quantity number, the recognized words may be weighted according to their informative value. Thus, fill words such as "and", "or", "the", ... may remain unconsidered, whereas substantives or proper names may be ranked in a high category. Further uncommon words may be ranked higher. Thus, the predefined data quality criterion may be fulfilled after having gathered sufficient informative value. Besides those text-based quality criteria, image quality can be considered, such as blur of the image data, exposure of the image data, contrast of the image data, and/or saturation of the image data.

In case the image quality is found to be low, the captured image data may undergo an image enhancement process (e.g. applying sharpening filters, auto contrast, auto exposure and/or auto saturation filters) prior to performing the OCR-recognition.

Further, the processing step may include masking out areas of the image that are found to be less relevant. For example, when capturing an image of a newspaper article or a magazine article, margins of a column can be recognized and only those characters/words, that are within the margins (i.e. those of the column) can be taken into account. Thus, characters/words of neighboring articles or advertisements can be excluded from the processing step thereby enhancing the search quality.

Even further, characters/words of neighboring articles may be recognized and considered for searching a digital version of a printed article corresponding to the transmitted image data. For example, the database being accessed for searching the intended article may have stored information, relating to the layout of the printed medium, such as which articles are printed on the same side and/or neighboring to each other.

Processing the captured image data may include analyzing the captured image data for additional processed image data. The additional processed image data may include information regarding the printed media as such, the printed paper, the print image and/or the content of the article. In particular, the additional processed image data may include information about at least one of: content of the printed article, a page size of the printed medium, a page number of the printed medium, a gloss level of the printed medium, a color of the printed medium, a font type, a font size, a font color, a typesetting of the printed medium, a number of images and/or a ratio of space covered by images:space covered by text.

In case of "content of the printed article", the recognized text can be analyzed, e.g. using artificial intelligence, AI, to analyze and determine, which kind of resort the article stems from (e.g. yellow press, youth magazines, financial, daily newspaper, ...), which newspaper/magazine is the origin, and/or a publishing period. This can be done e.g. by analyzing the spelling stile using AI, including respectively trained neuronal networks.

That additional information may be used to search the respective digital version of the printed article at hand.

The method steps described above are preferably performed on the same device, e.g. on a user equipment, UE, such as personal computer, a laptop computer, a tablet computer, a smartphone or on another electronic device.

According to a further aspect of the present invention, a computer-implemented method for an automated search of an article of a printed medium is provided, which may be carried out (at least in part) on a database management device. The database management device may include software and/or hardware and may be distributed over a network. Particularly the database management device may be a cloud-based database management device.

This method comprising the steps of:
- Receiving processed image data, e.g. by a database management device, wherein the processed image data is based on captured image data that has passed a data quality check, i.e. the received processed image data meets the predefined data quality criterion defined above.
- Accessing at least one database, wherein the at least one database includes database entries each assigned to a respective digital version of a printed article. It is to be understood, that the database(s) that are accessed may include further database entries that are not assigned to a respective digital version of a printed article. In a particular example, at least one database may be a database of a publishing house, of a newspaper, a magazine and/or the like. The database(s) may be distributed and may in particular be cloud-based databases or databases accessible via the internet.
- Initiating a search on the at least one database for a digital version of a printed article corresponding to the received image data. The search may be particularly based on recognized OCR characters/text obtained in the received processed image data.
- Determining a search result quality based on the received image data and the searched digital version of the printed article and checking whether a predefined search result quality criterion is met (i.e. if the search result quality meets the predefined search result quality criterion). The predefined search result quality criterion may be based on a relevancy score and/or a distance in score value.
- Requesting for additional and/or further processed image data, if the search result quality criterion is not met. Thus, in case it is found that the search results found do not meet the predefined search result quality criterion, i.e. if there is not sufficient certainty that the found digital version of a printed article corresponds to the searched printed article, additional and/or further processed image data can be requested. In case of requesting further processed image data, the step of capturing image data can be repeated so that additional areas of the printed medium are captured and/or already captured areas are captured again, however with higher image quality.
   In case of requesting additional processed image data, already captured image data can be processed again and/or the step of capturing image data can be repeated so that additional areas of the printed medium are captured and/or already captured areas are captured again, however with higher image quality. For repeating the step of capturing image data, a user may be informed (e.g. on the UE's display) that further image data is required. Particularly, the user may be requested to capture distinct areas of the printed medium, such as a title of the printed medium and/or the article, images belonging to the article, the beginning of the article, the end of the article and/or the like. The then captured image data can be linked with the respective areal information, being a type of additional information, for improving the search.
   For obtaining additional processed image data the already captured and/or anew captured image data is processed so as to obtain e.g. information regarding the printed media as such, the printed paper, the print image and/or information of the content of the printed article. In particular, the additional processed image data may include information about at least one of: a content, a page size of the printed medium, a page number of the printed medium, a gloss level of the printed medium, a color of the printed medium, a font type, a font size, a font color, a typesetting of the printed medium, a number of images and/or a ratio of space covered by images:space covered by text.
- Transmitting data corresponding to the digital version of the searched printed article, if the search result quality criterion is met. The data may be transmitted to a device having transmitted the processed image data, e.g. a user equipment, which has performed the capturing, processing and/or the data quality determining steps. Besides transmitting the digital version of the printed article, a link or pointer to the digital version of the printed article can be transmitted.

In a particularly preferred aspect of the invention, only one search result, i.e. data corresponding to the digital version of the searched article, is transmitted. Thus, the recipient, e.g. a user, is not bothered with choosing the desired article from a multitude of possible search results.

According to a further aspect, the method may further comprise, after requesting for additional and/or further processed image data, repeating the steps of
- Receiving processed image data, particularly additional and/or further processed image data;
- Accessing the at least one database and initiating a search on the at least one database for a digital version of a printed article corresponding to the received image data. Optionally, the database entries are pre-filtered based on the additional processed image data. For example, if it can be determined by the additional processed image data, that the gloss of the paper of the printed article is low (i.e. having a matte surface) glossy magazines can be excluded from the search. Further, if it is e.g. be determined that the ratio images:space covered by text is high, i.e. there is lots of images, articles of glossy magazines or yellow press articles can be predominantly searched.
- Determining a search result quality based on the received image data and the searched digital version of the printed article and checking whether a predefined search result quality criterion is met.

Hence, the search can be refined to provide a high quality search result, i.e. the searched article, only.

The predefined search result quality criterion may include a relevancy in score criterion and/or a distance in score criterion to a second best search result. Thus, it possible to determine a probability, whether the search result(s) found correspond to the actual searched article, and in case there are multiple results if the best result is sufficiently distinct from the next best one. This allows returning only one search result, i.e. data corresponding to the digital version of the searched article.

Further, the method may include requesting for further and/or additional processed image data, if a relevancy criterion is met and a distance in score criterion is not met. Thus, the search can be precisely refined.

In case the search result quality criterion cannot be met, even after having requested (and received) further and/or additional processed image data, the best search result, and/or a number of relevant search results can be transmitted, while informing the user about the not met search result quality criterion. Thus, the user has the opportunity to check whether the search result corresponds to the searched article.

The method performed at least in part by the database management device may further include receiving captured image data and processing the captured image data. The captured image data may be actively requested by the database management device. Thus, in case the predefined data quality criterion and/or the predefined search result quality criterion cannot be met, the image data processing can be performed on a more powerful device, than e.g. a user's UE, thereby increasing the quality of the processed image data. In case the processing is done on the UE-side, less data has to be transmitted, and the captured image data may be transmitted only, if there is a need for more complex image data processing, as e.g. the captured image data has poor quality.

Subsequently a search can be initiated on the at least one database for a digital version of a printed article corresponding to the captured image data based on the processed received captured image data.

Further, the data corresponding to the digital version of the searched printed article that is transmitted or received, respectively, may include or point to additional content that is not present in the printed article. Thus, additional content such as (personalized) advertisements, videos, image galleries, audio tracks, and/or the like can be linked to the printed article.

A further aspect of the invention relates to a device, particularly a user equipment, for performing an automated search of an article of a printed medium, that is adapted to perform a method in accordance with any one of claims 1 to 6. The device may include a processor and a storage, for storing computer-executable code which when executed by the processor causes the processor to perform the method according to any one of claims 1 to 6. Particularly, the device includes
- means for capturing image data of the printed medium;
- means for processing the captured image data, including an optical character recognition;
- means for determining a data quality based on the processed image data and means for checking whether a predefined data quality criterion is met;
- means for transmitting the processed image data to a database management device, if the quality criterion is met, the database management device being adapted to
   - access at least one database, wherein the at least one database includes database entries each assigned to a respective digital version of a printed article, and to
   - initiate a search on the at least one database for a digital version of a printed article corresponding to the transmitted image data;
- means for receiving data from the database management device, the data corresponding to the digital version of the searched printed article, and optionally
- means for displaying and/or forwarding the digital version of the searched printed article.

A further aspect of the invention relates to a database management device, for performing an automated search of an article of a printed medium, that is adapted to perform a method in accordance with any one of claims 7 to 12. The device may include a processor and a storage, for storing computer-executable code which when executed by the processor causes the processor to perform the method according to any one of claims 7 to 12. Particularly, the database management device comprises
- means for receiving processed image data, wherein the processed image data is based on captured image data and having passed a data quality check;
- means for accessing at least one database, wherein the at least one database includes database entries each assigned to a respective digital version of a printed article,
- means for initiating a search on the at least one database for a digital version of a printed article corresponding to the received image data,
- means for determining a search result quality based on the received image data and the searched digital version of the printed article and means for checking whether a predefined search result quality criterion is met,
- means for requesting additional and/or further processed image data, that request for additional and/or further processed image data, if the search result quality criterion is not met, and
- means for transmitting data corresponding to the digital version of the searched printed article to at least one user equipment, if the search result quality criterion is met.

A further aspect of the invention relates to a system for performing an automated search of an article of a printed medium, the system including at least one device as described above and at least one database management device described above.

A further aspect of the invention relates to a computer program, comprising instructions, which when executed A further aspect of the invention relates to a computer-readable storage medium comprising instructions which, by a processor cause the processor to perform a method as outlined above.

### Brief description of the figures

The present disclosure will be more readily appreciated by reference to the following detailed description when being considered in connection with the accompanying drawings in which:
- Fig. 1: shows a schematic illustration of a system for performing an automated search of an article of a printed medium;
- Fig. 2: shows a schematic flow diagram of a method for performing an automated search of an article of a printed medium;
- Fig. 3: shows a schematic flow diagram of a further method for performing an automated search of an article of a printed medium, which can be performed together with the method shown in Fig. 2, and
- Figs. 4A,B: show a more detailed schematic flow diagram of a method for performing an automated search of an article of a printed medium.

### Detailed description of the figures

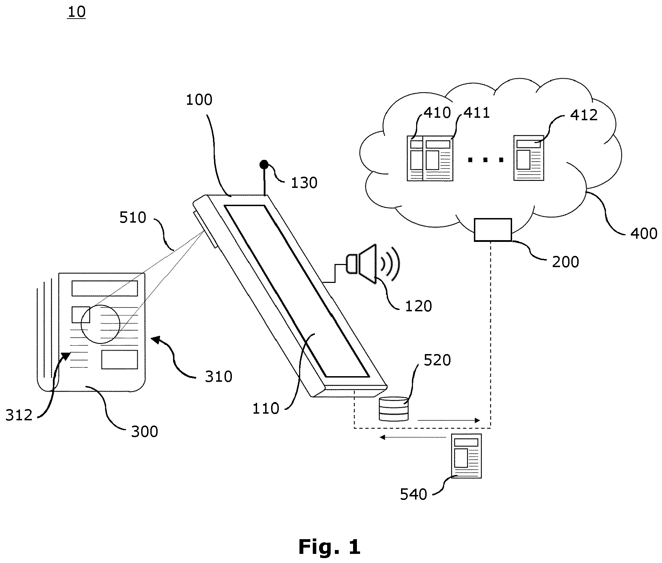

Fig. 1 shows a schematic illustration of a system 10 for performing an automated search of an article 310 of a printed medium 300. The printed medium 300 may be a book, a printed newspaper, a printed magazine, a poster, an advertisement and/or the like. Here, schematically two articles 310, 312 are printed on page of the printed medium 300. For searching the printed article 312, a user of a user equipment, UE, such as a mobile phone 100, the user captures image data 510 of the printed article 312, e.g. using a camera of the UE. This image data 510 is processed the processed image data 520 is (wirelessly) transmitted to a database management device 200, which may include software and/or hardware and may be distributed over a network.

In the embodiment shown, the database management device 200 is a cloud-based database management device. The database management device 200 is adapted to access at least one database 400, wherein the at least one database includes database entries 410, 411, 420 each assigned to a respective digital version of a printed article. The database management device 200 is further adapted to initiate a search on the at least one database 400 for a digital version of a printed article corresponding to the transmitted image data 520.

After having successfully performed the search data 540 corresponding to the digital version of the searched printed article can be transmitted to the mobile phone 100. The data 540 may include the digital version of the searched printed article and or a pointer/link to the digital version of the searched printed article.

After having received the data 540, the digital version of the searched printed article may be displayed on display 110 of the UE 100 and/or may be displayed acoustically via speakers 120. It is to be understood that the speakers may be part of the UE 100, or may be coupled (e.g. via Bluetooth) with the UE 100. Further, data 540 may be forwarded, e.g. by using antenna 130 to further recipients. Antenna 130 may be a mobile communication antenna, a Bluetooth antenna, a WIFI-antenna, and/or the like.

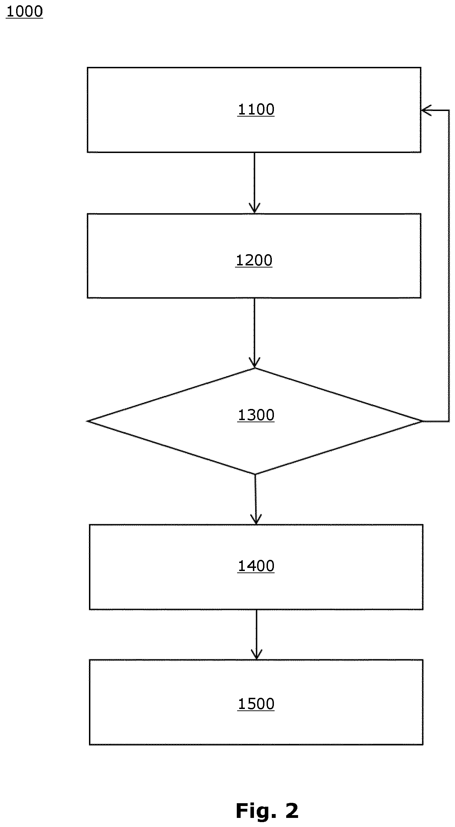

Fig. 2 shows a schematic flow diagram of a computer implemented method 1000 for performing an automated search of an article of a printed medium. This method is preferably performed by the device 100, e.g. a UE, such as a mobile phone. The method comprises the steps of
- Capturing 1100 image data 510 of the printed medium, e.g. using a camera of the device 100;
- Processing 1200 the captured image data 510, including an optical character recognition, optionally in real time;
- Determining 1300 a data quality based on the processed image data and checking whether a predefined data quality criterion is met. In case the predefined data quality criterion is not met, steps 1100 and 1200 can be repeated;
- Transmitting 1400 the processed image data 520 to the database management device 200, if the quality criterion is met.
- Receiving 1500 data 540 from the database management device 200, the data 540 corresponding to the digital version of the searched printed article.

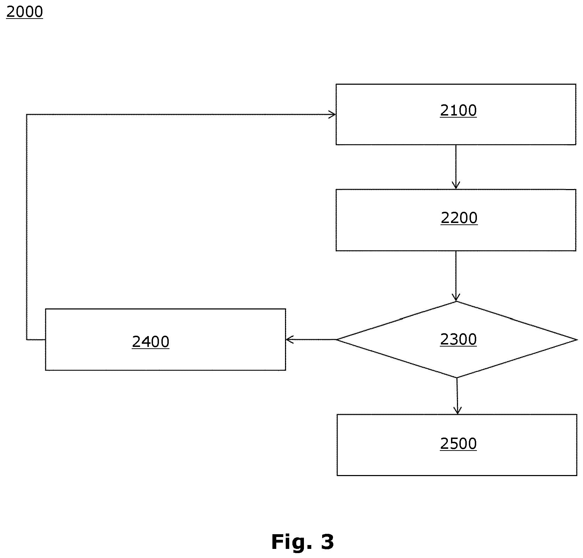

Fig. 3 shows a schematic flow diagram of a computer implemented method 2000 for performing an automated search of an article of a printed medium. This method 200 is preferably performed by the database management device 200. The method comprises the steps of
- Receiving 2100 processed image data 520, wherein the processed image data is based on captured image data that has passed a data quality check, preferably performed by device 100;
- Accessing 2200 at least one database 400, wherein the at least one database includes database entries each assigned to a respective digital version of a printed article 410, 411, 412, and initiating a search on the at least one database for a digital version of a printed article corresponding to the received image data 520;
- Determining 2300 a search result quality based on the received image data 520 and the searched digital version of the printed article and checking whether a predefined search result quality criterion is met;
- Requesting 2400 for additional and/or further processed image data 520, if the search result quality criterion is not met, and
- Transmitting 2500 data 540 corresponding to the digital version of the searched printed article, if the search result quality criterion is met.

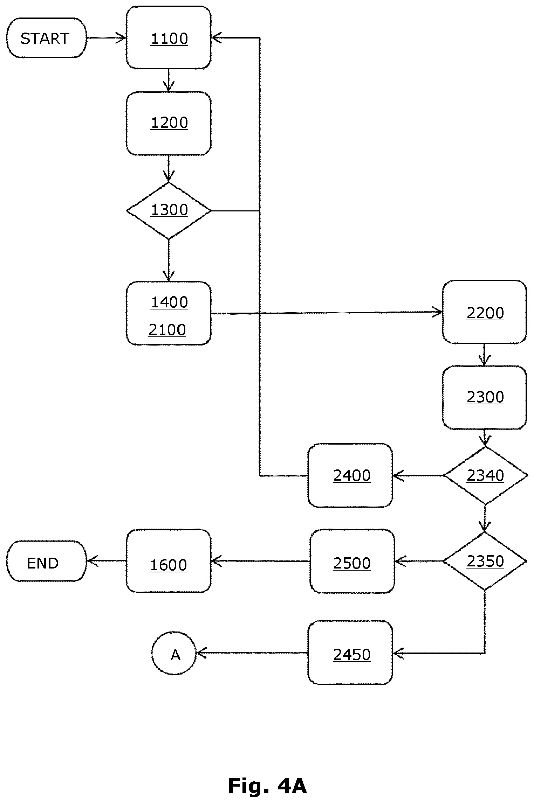

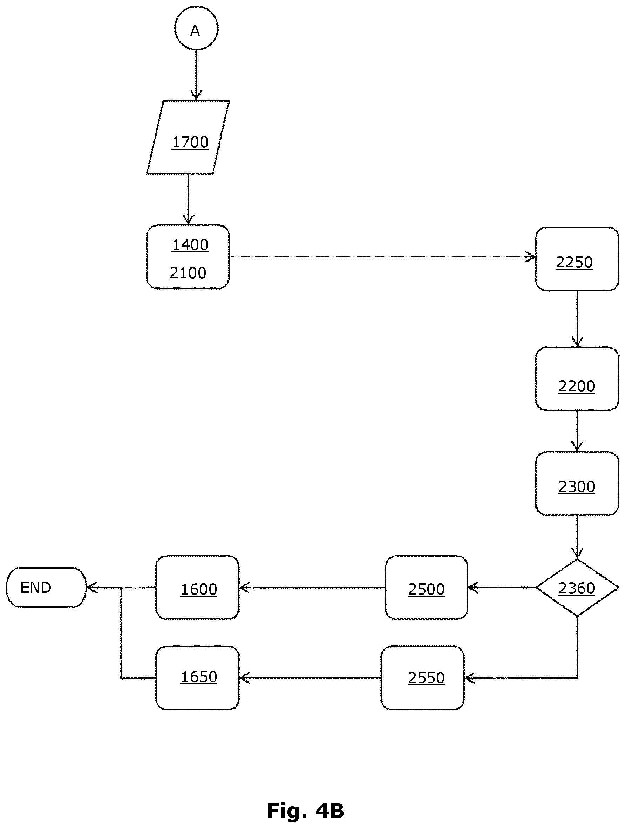

Figs. 4A and 4B show a more detailed schematic flow diagram of a computer implemented method 1000, 2000 for performing an automated search of an article of a printed medium. The method can be performed at least in part of a device 100 and on a database management device 200. Particularly, the device 100 and the database management device 200 communicate to perform the method.

Typically, the method starts with launching a respective app, program or browser-based service on the device 100. Subsequently, image data 510 of the printed medium, e.g. using a camera of the device 100 can be captured (step 1100). Subsequently (step 1200) the captured image data 510 is processed, including an optical character recognition. This processing may be performed in real time. Further, the processing may also include analyzing the captured image data for additional processed image data. The additional processed image data may include information regarding the printed media as such, the printed paper and/or the print image. In particular, the additional processed image data may include information about at least one of: content of the article, a page size of the printed medium, a page number of the printed medium, a gloss level of the printed medium, a color of the printed medium, a font type, a font size, a font color, a typesetting of the printed medium, a number of images and/or a ratio of space covered by images:space covered by text.

In step 1300 a data quality is determined based on the processed image data and it is checked whether a predefined data quality criterion is met. In case the predefined data quality criterion is not met, steps 1100 and 1200 can be repeated.

The predefined data quality criterion may include at least one of an OCR quality number, a word quantity number, a word quality number, a weighted word quantity number, blur of the image data, exposure of the image data, contrast of the image data, and/or saturation of the image data.

If the data quality criterion is met, the processed data can be transmitted (step 1400) and received (step 2100). After having received the processed image data at least one database can be accessed (step 2200) for initiating a search on the at least one database for a digital version of a printed article corresponding to the received image data. In step 2300 a search result quality based on the received image data 520 and the searched digital version of the printed article is determined and it is checked whether a predefined search result quality criterion (e.g. a relevancy score and/or a distance in score value) is met.

In case the predefined search result quality criterion is met, the data corresponding to the digital version of the searched printed article can be transmitted to the device 100 (step 2500) and can be displayed (step 1600) visually and/or acoustically, stored and/or forwarded. Thereafter, the method can be ended.

In case it shows that e.g. a relevancy score of the search result is too low (step 2340), further and/or additional processed image data can be requested (cf. step 2400). In case it shows that e.g. a distance in score value of the best search result to the next best search result is too low (step 2350), further and/or additional processed image data can be requested (step 2450). In this particular case, the user may be requested to capture more/additional image data (step 1700, Fig. 4B). This request to capture more/additional image data may include explicit instructions, which areas of the printed article to capture. For example, a user may be requested to capture a title of the printed medium and/or a title of the article, images belonging to the article, the beginning of the article, the end of the article and/or the like. The then captured image data can be linked with the respective areal information, being a type of additional information, for improving the search.

After having captured more/additional image data, the processing step 1200 can be repeated (not shown in Fig. 4B) and/or the captured image data (i.e. not processed) and/or processed image data can be transmitted to the database management device 200 (steps 1400, 2100).

In case captured, non-processed image data is transmitted/received, the database management device 200 may perform a respective processing. In case additional processed image data is transmitted, the database entries are pre-filtered based on the additional processed image data (step 2250). Subsequently, a further search can be initiated on the at least one database (step 2200).

After having performed the search, the search result quality based on the received image data 520 and the searched digital version of the printed article can be determined again and it can be checked whether a predefined search result quality criterion (e.g. a relevancy score and/or a distance in score value) is now met.

In case the predefined search result quality criterion is met, the data corresponding to the digital version of the searched printed article can be transmitted to the device 100 (step 2500) and can be displayed (step 1600) visually and/or acoustically, stored and/or forwarded. Thereafter, the method can be ended.

In case the predefined search result quality criterion is not met again, the data corresponding to the digital version of the searched printed article can be nonetheless transmitted to the device 100 (step 2550) and can be displayed (step 1650) visually and/or acoustically, stored and/or forwarded, including a hint that the predefined search result quality criterion was not met. Thus, the user is informed that the search result may deviated from the searched article. Thereafter, the method can be ended.

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

### List of reference signs

- 10: system
- 100: UE (device)
- 110: display
- 120: speaker
- 130: antenna
- 200: database management device
- 300: printed medium
- 310: printed article
- 312: printed article
- 400: database (cloud-based)
- 410: digital version of printed article
- 411: digital version of printed article
- 412: digital version of printed article
- 510: captured image data
- 520: transmitted/received image data (processed)
- 540: data corresponding to the digital version of the searched printed article
- 1000: method
- 1100: capturing
- 1200: processing
- 1300: determining
- 1400: transmitting
- 1500: receiving
- 1600: displaying
- 1650: displaying (with hint)
- 1700: user request
- 2000: method
- 2100: receiving
- 2200: accessing
- 2250: pre-filtering
- 2300: determining
- 2340: determining (relevancy)
- 2350: determining (distance)
- 2360: determining (relevancy and distance)
- 2400: requesting further/additional processed image data
- 2450: requesting further/additional processed image data
- 2500: transmitting
- 2550: transmitting (with hint)

## Claims

1. A computer-implemented method (1000) for an automated search of an article (310, 312) of a printed medium (300), particularly of a printed newspaper and/or a printed magazine, the method comprising:
capturing (1100) image data (510) of the printed medium;
processing (1200) the captured image data (510), including an optical character recognition;
determining (1300) a data quality based on the processed image data and checking whether a predefined data quality criterion is met;
transmitting (1400) the processed image data (520) to a database management device (200), if the quality criterion is met, the database management device (200) being adapted to
access at least one database (400), wherein the at least one database includes database entries each assigned to a respective digital version of a printed article (410, 411, 412), and to
initiate a search on the at least one database (400) for a digital version of a printed article corresponding to the transmitted image data (520);
receiving (1500) data (540) from the database management device (200), the data (540) corresponding to the digital version of the searched printed article.

2. The computer-implemented method (1000) according to claim 1, further comprising
displaying (1600) the digital version of the searched printed article on a device (100) receiving the data (540) and/or forwarded to a further recipient.

3. The computer-implemented method (1000) according to any preceding claim, wherein
the optical character recognition is performed in real-time, and wherein
the step of capturing (1100) image data (510) of the printed medium may be continued until the predefined data quality criterion is met.

4. The computer-implemented method (1000) according to any preceding claim, wherein the predefined data quality criterion includes at least one of
an OCR quality number;
a word quantity number,
a word quality number,
a weighted word quantity number
blur of the image data,
exposure of the image data,
contrast of the image data, and/or
saturation of the image data.

5. The computer-implemented method (1000) according to any preceding claim, wherein processing (1200) the captured image data (510) includes masking out areas of the image, found to be at least less relevant.

6. The computer-implemented method (1000) according to any preceding claim, wherein processing (1200) the captured image data (510) includes analyzing the captured image data (510) for additional processed image data, the additional processed image data including information about at least one of:
a content information,
a page size of the printed medium,
a page number of the printed medium,
a gloss level of the printed medium,
a color of the printed medium,
a font type,
a font size,
a font color,
a typesetting of the printed medium,
a number of images and/or
a ratio of space covered by images:space covered by text.

7. A computer-implemented method (2000) for an automated search of an article of a printed medium, particularly of a printed newspaper and/or a printed magazine, the method comprising:
receiving (2100) processed image data (520), wherein the processed image data is based on captured image data that has passed a data quality check (1300);
accessing (2200) at least one database (400), wherein the at least one database includes database entries each assigned to a respective digital version of a printed article (410, 411, 412), and initiating a search on the at least one database for a digital version of a printed article corresponding to the received image data (520);
determining (2300) a search result quality based on the received image data (520) and the searched digital version of the printed article and checking whether a predefined search result quality criterion is met;
requesting (2400) for additional and/or further processed image data (520), if the search result quality criterion is not met, and
transmitting (2500) data (540) corresponding to the digital version of the searched printed article, if the search result quality criterion is met.

8. The computer-implemented method (2000) according to claim 7, the method further comprising after requesting for additional and/or further processed image data, repeating the steps of
receiving (2100) processed image data (520),
accessing (2200) the at least one database (400), optionally pre-filtering (2250) the database entries based on the additional processed image data, and initiating a search on the at least one database for a digital version of a printed article corresponding to the received image data (520); and
determining (2300) a search result quality based on the received image data (520) and the searched digital version of the printed article and checking whether a predefined search result quality criterion is met.

9. The computer-implemented method (2000) according to claim 7 or claim 8, wherein the predefined search result quality criterion includes a relevancy in score criterion and/or a distance in score criterion to a second best search result.

10. The computer-implemented method (2000) according to claim 9, wherein the method includes requesting (2400) for further and/or additional processed image data (520), if a relevancy criterion is met and a distance in score criterion is not met.

11. The computer-implemented method (2000) according to any one of claims 7 to 10, further comprising
receiving captured image data (510) and processing (1200) the captured image data (510),
initiating a search on the at least one database for a digital version of a printed article corresponding to the captured image data (520), based on the processed received captured image data.

12. The computer-implemented method (1000) according to any one of claims 1 to 6, or the computer-implemented method (2000) according to any one of claims 7 to 11 wherein the data (540) corresponding to the digital version of the searched printed article include or point to additional content, not present in the printed article.

13. A device (100), particularly a user equipment, for performing an automated search of an article (310, 312) of a printed medium (300) in accordance with any one of claims 1 to 6, the device including
means for capturing (1100) image data (510) of the printed medium;
means for processing (1200) the captured image data (510), including an optical character recognition;
means for determining (1300) a data quality based on the processed image data and means for checking whether a predefined data quality criterion is met;
means for transmitting (1400) the processed image data (520) to a database management device (200), if the quality criterion is met, the database management device (200) being adapted to
access at least one database (400), wherein the at least one database includes database entries each assigned to a respective digital version of a printed article (410, 411, 412), and to
initiate a search on the at least one database for a digital version of a printed article corresponding to the transmitted image data (520);
means for receiving (1500) data (540) from the database management device (200), the data (540) corresponding to the digital version of the searched printed article, and optionally
means for displaying (110, 120) and/or forwarding (130) the digital version of the searched printed article.

14. A database management device (200), for performing an automated search of an article (310, 312) of a printed medium (300) in accordance with any one of claims 7 to 12, the database management device (200) comprising
means for receiving (2100) processed image data (520), wherein the processed image data is based on captured image data and having passed a data quality check (1300);
means for accessing (2200) at least one database (400), wherein the at least one database includes database entries each assigned to a respective digital version of a printed article (410, 411, 412),
means for initiating a search on the at least one database for a digital version of a printed article corresponding to the received image data (520);
means for determining (2300) a search result quality based on the received image data (520) and the searched digital version of the printed article and means for checking whether a predefined search result quality criterion is met;
means for requesting (2400) additional and/or further processed image data (520), that request for additional and/or further processed image data (520), if the search result quality criterion is not met, and
means for transmitting (2500) data (540) corresponding to the digital version of the searched printed article to at least one user equipment (100), if the search result quality criterion is met.

15. System (10) for performing an automated search of an article (310, 312) of a printed medium (300), the system including
at least one device (100) according to claim 13, and at least one database management device (200) according to claim 14.

16. Computer program, comprising instructions, which when executed by a processor cause the processor to perform a method according to any one of claims 1 to 6 or and/or a method according to any one of claims 7 to 12.
